# EUROPEAN PATENT APPLICATION

(11) **EP 4 342 681 A1**
(43) Date of publication of application: **27.03.2024**
(21) Application number: 22306409.8
(22) Date of filing: 23.09.2022
(51) Int. Cl.: B42D 25/00, B42D 25/351, B42D 15/02, G06K 19/077, G06K 19/07

(54) **DATA CARRIER WITH INDEPENDENT LIGHT SOURCE**

(71) Applicant: THALES DIS FRANCE SAS, 92190 Meudon (FR)
(72) Inventor: GASPARI, Sebastien, 13600 LA CIOTAT (FR); WADELL, Daniel, 13600 LA CIOTAT (FR); ODDOU, Laurent, 13600 LA CIOTAT (FR); SEBAN, Frédérick, 13600 LA CIOTAT (FR); SUBRA, Sébastien, 13600 LA CIOTAT (FR); ANDREO, Benjamin, 13600 LA CIOTAT (FR)
(74) Representative: Castelo, Jérôme

(57) **Abstract**

A data carrier (1) for a secure article comprises a carrier body (2) defining an extension direction (E), and at least one light emitting element (4) being arranged in the carrier body (2). The carrier body (2) comprises at least one light guiding element (3). The light emitting element (4) is at least partially and preferably entirely arranged in the light guiding element (3). The light guiding element (3) is configured to guide light being emitted from the light emitting element (4) within the light guiding element (3) and along a transverse direction (T) extending perpendicularly to the extension direction (E).

## Description

### TECHNICAL FIELD

The present invention relates to a data carrier for a secure article according to claim 1 and to a method of producing a data carrier according to claim 15.

### PRIOR ART

Data carriers for secure article such as bank cards, smart cards, identity cards or the like are widely used for a variety of applications such as authorizing financial transactions for a user or in authorization or identification processes, for instance. Such data carriers are often the subject of forgery.

### SUMMARY OF THE INVENTION

It is an object of the present invention to provide a data carrier that has an improved protection against forgery and that at the same time has a simple design.

This object is achieved with a data carrier according to claim 1. That is, a data carrier for a secure article is provided, wherein the data carrier comprises a carrier body defining an extension direction and at least one light emitting element being arranged in the carrier body. The carrier body comprises at least one light guiding element. The light emitting element is at least partially and preferably entirely arranged in the light guiding element. The light guiding element is configured to guide light being emitted from the light emitting element within the light guiding element and along a transverse direction extending perpendicularly to the extension direction.

The carrier body preferably comprises a top surface and a bottom surface, wherein the extension direction preferably extends from said top surface towards said bottom surface. The extension direction can be seen as a vertical direction of the carrier body. Consequently, the transverse direction running perpendicularly to the extension direction can be seen as a horizontal direction of the carrier body.

The carrier body preferably comprises one or more layers and/or one or more polymers and/or one or more plastics, preferably thermoplastics, particularly preferably polycarbonate and/or polyvinyl chloride and/or polyethylene terephthalate and/or PET-G and/or Teslin^{®}. One or more of these layers can be transparent or non-transparent. For instance, one or more of these layers could be coloured. For example, polyvinyl chloride comprising a coloured bulk is conceivable. Additionally or alternatively it is conceivable that the carrier body comprises one or more layers of print such as an offset print or a print made by screen-printing. It is furthermore conceivable that the carrier body comprises one or more layers comprising or consisting of metallic compounds. For instance, one or more metallic layers could be embedded between one or more transparent plastic layers. The carrier body preferably corresponds to a card body, or a passport datapage, as it is commonly known in the industry of secure articles such as security documents. It is furthermore particularly preferred that the light guiding element and the light emitting element form a so-called inlay as it is known in the art.

The light emitting element is preferably entirely embedded within the light guiding element.

The light guiding element preferably has a transmittance to light being in the ultraviolet region of the electromagnetic spectrum and/or in the visible region of the electromagnetic spectrum and/or in the infrared region of the electromagnetic spectrum. The transmittance is measured by means commonly known in the state of the art. For instance, a UV transmittance can be measured through a UV spectrometer.

Furthermore, the transmittance preferably is 80 % or more, such as 90 % or more.

The light guiding element is preferably provided as at least one film and/or as at least one layer. That is, the light guiding element can be a single layer or a single film. However, it is likewise conceivable that the light guiding element comprises or consists of two or more films and/or layers.

Additionally or alternatively the light guiding element preferably comprises or consists of one or more polymers and/or one or more plastics. The light guiding element preferably comprises or consists of one or more thermoplastic polymers. The light guiding element particularly preferably comprises or consists of polycarbonate and/or polymethylmethacrylate and/or polyethylene, although other materials are likewise conceivable.

The light guiding element is particularly preferred configured to transmit light without or with only minimal attenuation through multiple light reflections within the material of the light guiding element itself.

It is furthermore particularly preferred that the light guiding element comprises a refractive index being higher than a refractive index of its adjacent components, e.g. of the layers being arranged above and below the light guiding element.

Said difference in refractive index can be achieved by the provision of materials of different refractive index. However, it is likewise conceivable that the same material is used, however of a different crystalline structure.

It is likewise particularly preferred that the light guiding element comprises a higher refractive index in a middle region than in peripheral regions with respect to the transverse direction.

The light guiding element preferably extends along an entire width of the data carrier with respect to the transverse direction.

As such, it is preferred that an edge of the light guiding element, i.e. a circumference or border of the light guiding element, provides part of an edge of the data carrier. Consequently, light being guided along the light guiding element along the transverse direction will be emitted towards an outside of the data carrier and will thus result in glowing edges or borders of the data carrier.

It is furthermore preferred that the light guiding element is transparent. However, to customize a colour appearance it is conceivable that at least part of the edge of the guiding element comprises a semi-transparent ink.

The light guiding element preferably has a thickness of 100 micrometer or more and/or of 450 micrometer or less with respect to the extension direction.

The light guiding element is preferably an integral constituent of the carrier body. That is, it is preferred that light guiding element is in firm connection with the other constituents of the carrier body such as with the one or more layers of the carrier body mentioned above, e.g. one or more layers of polycarbonate, polyvinyl chloride, polyethylene terephthalate. Said firm connection is preferably achieved by laminating the different components including the light guiding element together in a lamination process as it is known in the art, with or without usage of an adhesive or glue.

The light guiding element preferably comprises a top surface and a bottom surface being arranged opposite to said top surface with respect to the extension direction, and wherein the light guiding element is configured to guide the light being emitted from the light emitting element by reflecting the light from its top surface and/or bottom surface. Hence, a propagation of the light being emitted from the light emitting element within the light guiding element is preferably caused by its reflection from the top and bottom surfaces of the light guiding element. The top surface and the bottom surface of the light guiding element preferably correspond to the top surface and the bottom surface of the light guiding element in the form of the layer or film as mentioned above.

The data carrier preferably further comprises at least one electronic module. The electronic module preferably comprises the light emitting element. The light emitting element preferably comprises at least one of a light emitting diode (LED), an LED panel, a micro LED, an organic light emitting diode (OLED), or a quantum dot.

That is, the light emitting element preferably corresponds to an LED, an LED panel, a micro LED, an OLED or a quantum dot and is particularly preferably provided by means of an electronic module comprising said light emitting element. This electronic module can thus be seen as light module such as an LED or OLED module.

The electronic module preferably comprises a chip, a memory, a microcontroller and CPU. and preferably additionally also a security element. The electronic module preferably furthermore comprises a protective casing comprising or consisting of at least one metallic compound, also called leadframe or grid, and resin such as epoxy.

The light emitting element and/or the electronic module preferably is a commercially available light emitting element and electronic module, respectively.

The electronic module possibly along with the light guiding element is preferably arranged within a cavity of the data carrier. However, the light emitting element can also be provided in different manners.

For instance, the light emitting element can be arranged on and/or in a substrate, and wherein said substrate is at least partially arranged within the light guiding element. The light emitting element is arranged on and/or in a region of the substrate being arranged within the light guiding element. In order to accommodate at least a region of the substrate it is preferred that the light guiding element comprises a slot, and wherein at least part of the substrate and the light guiding element are arranged within the slot. The slot preferably extends entirely through the light guiding element and/or extends along the extension direction. To this end it is particularly preferred to print a plurality of micro LED onto the substrate. It is furthermore preferred to arrange one or more electrically conductive conducts on the substrate. The substrate with the micro LED is then preferably inserted into the slot of the light guiding element. It is particularly preferred that the substrate is arranged such that its light emitting elements are arranged within the slot whereas the electrically conductive conducts are arranged outside of the slot and such as to establish an electrically contact with antenna(s), see further below. A preferred arrangement of the substrate is a folded configuration, i.e. it is preferred that the substrate extends through the slot along the extension direction and extends along the transverse direction in regions above and/or below the slot. It is furthermore preferred that the substrate in these regions is arranged on the top surface and/or on the bottom surface of the light guiding element. In other words, it is preferred that the substrate at least partially extends along the top surface and/or the bottom surface of the light guiding element and with respect to the transverse direction. It is furthermore preferred that the carrier body comprises one or more compensation layers, wherein the compensation layer(s) are arranged next to the substrate on the top surface and/or the bottom surface of the light guiding element with respect to the transverse direction. A thickness of the compensation layers preferably corresponds to a thickness of the substrate with respect to the extension direction.

To customize a colour appearance it is conceivable to use light emitting elements that emit light of different wavelengths. For instance, LEDs of different colours could be used.

The data carrier preferably further comprises at least one power element that is in connection with the light emitting element and that is configured to power the light emitting element. The power element is preferably arranged in the carrier body and is particularly preferably arranged on a top surface of the light guiding element or on a bottom surface of the light guiding element. This power element can be referred to as first power element.

The power element can be in wired contact or in wireless contact with the light emitting element. A wired connection between the power element and the light emitting element could be provided via an electrically conducting wire, for instance. A preferred power element in this case would be a battery or the like.

However, a wireless connection between the power element and the light emitting element is likewise conceivable. In this case, it is preferred that the power element is an antenna, particularly preferably a RFID antenna.

Hence, the power element preferably corresponds to an antenna, particularly preferably to an RFID antenna.

The power element is preferably configured to be powered by an external device. The external device preferably is an RFID reader.

The antenna is preferably configured to receive an input signal and to transmit an output signal. In the event of an RFID antenna it is preferred that the input signal and the output signal have a frequency in the radio frequency range.

Hence, the electronic module comprising the light emitting element and the antenna being in connection with the electronic module preferably form an RFID transponder, and wherein the RFID transponder is preferably powered by energy from the external device such as an RFID reader.

The external device is preferably arranged outside of the data carrier and thus corresponds to a remote device being arranged remotely from the data carrier.

The data carrier preferably further comprises at least one further electronic module. The further electronic module preferably is a dual interface module or a contactless module and/or preferably comprises at least one of a power management unit, a microcontroller unit, a memory and CPU.

The further electronic module preferably is in connection with at least one power element. This power element can be referred to as second power element.

The power element being in connection with the further electronic module can correspond to the power element being in connection with the light emitting element. In other words, the first power element and the second power element can be the same and only power element. Alternatively, the power element being in connection with the further electronic module can differ from the power element being in connection with the light emitting element. A location of the power element being in connection with the further electronic module preferably differs from a location of the power element being in connection with the light emitting element with respect to the extension direction and/or with respect to the transverse direction.

That is, it is conceivable that the data carrier comprises two or more electronic modules, wherein one of which is the LED module mentioned above, i.e. the electronic module comprising the light emitting element, and the other one or more preferably correspond to other electronic modules such as a dual interface module or a contactless module. These other electronic modules preferably correspond to electronic modules being known in the state of the art and being commercially available.

The further electronic module is preferably powered by at least one power element as it has been explained above with respect to the electronic module comprising the light emitting element. That is, the power element can be in a wired or wireless connection with the further electronic module. Furthermore, the power element can be a battery or the like or an antenna, for instance. To this end, it is particularly preferred that the power element corresponds to an antenna being configured to receive an input signal and to transmit an output signal, and wherein said antenna particularly preferably corresponds to an RFID antenna as mentioned above.

A single power element such as a single antenna that powers both electronic modules is conceivable. However, it is likewise conceivable that each electronic module has its own power element. As such, it is preferred that the further electronic module has a further power element that differs from the power element powering the electronic module comprising the light emitting element. If two or more power elements are provided, it is preferred that they are arranged at different locations in the data carrier. In fact, it is preferred that the location of the power element being in connection with the further electronic module, i.e. the further power element, differs from a location of the power element being in connection with the electronic module comprising the light emitting element with respect to the extension direction and/or with respect to the transverse direction. Thereby, the manufacturing of the data carrier is simplified and a mutual interference of the power elements can be minimized. To this end it is particularly preferred to provide the power element on the top surface and the further power element on the bottom surface of the light guiding element or vice versa.

The antenna preferably consists of an electrically conductive material such as silver, copper or aluminium. The antenna can be laid through commonly known printing technologies such as screen-printing, ink jet printing or flexography, particularly preferably while using ink comprising an electrically conductive material such as silver particles or copper particles. Alternatively, it is likewise conceivable to directly lay a wire onto the substrate of the antenna, for instance through ultrasonic technology (local heating of plastic through US) or glued onto it through a varnish applied onto the wire with heating joint action. The substrate of the antenna preferably corresponds to a component of the carrier body such as to one of the layers of the carrier body, see above.

The data carrier preferably further comprises at least one reflection element, the reflection element being arranged such that light being guided within the light guiding element and being incident on the reflection element is reflected from the reflection element back into the light guiding element.

The reflection element is preferably arranged on a top surface and/or a bottom surface of the light guiding element.

The reflection element preferably comprises or consists of at least one metallic compound and particularly preferably is a metallic layer.

The reflection element preferably comprises or consists of at least one white sheet, for example a white polymer sheet, with retroreflective elements.

The reflection element preferably comprises or consists of reflective ink.

The reflection element preferably comprises or consists of a surface patterning, such as for example a mechanical embossing of a surface.

The reflection element serves the purpose of enhancing a reflection of the light propagating within the light guiding element.

The reflection element preferably extends at least partially along the transverse direction. For instance, the reflection element could correspond to a metallic layer that is regionally arranged on the top surface of the light guiding element, wherein one or more other regions of the top surface of the light guiding element are free from the reflection element. However, it is likewise conceivable that the entire top surface and/or bottom surface of the light guiding element comprises at least one reflection element being arranged thereon. In addition, it is conceivable that two or more reflection elements are provided. Said two or more reflection elements can be arranged immediately adjacent to one another or spaced apart from one another with respect to the transverse direction.

The top surface of the light guiding element preferably corresponds to the outer top surface of the light guiding element, i.e. the top surface that is facing away from an interior of the light guiding element and being in contact with another component of the carrier body such as another layer of the carrier body. Likewise, the bottom surface of the light guiding element preferably corresponds to the outer bottom surface of the light guiding element that faces away from the interior of the light guiding element.

The data carrier preferably further comprises at least one deflection . The deflection element is preferably arranged such that light being guided within the light guiding element and being incident on the deflection element is deflected along one or more deflection directions running at an angle to the transverse direction. One of the deflection directions preferably runs perpendicularly to the transverse direction.

The deflection element is preferably configured to diffuse and/or scatter and/or reflect incident light. The deflection element preferably corresponds to a diffusive ink and/or a scattering material and/or a texturation and/or a structural colouring. The scattering material is preferably configured to exhibit the Tyndall effect. That is, the scattering material preferably is made of light scattering particles in a colloid or in a suspension.

The deflection element serves the purpose of deflecting the light being propagating along the transverse direction of the light guiding element towards an outside of the light guiding element. As such, an illumination of particular one or more regions of the data carrier are possible. For instance, and as will be explained in greater detail below, the data carrier can comprise at least one security element, and wherein an illumination of the security element could be achieved by light being deflected by the deflection element and being directed towards the security element.

A deflection of the light is preferably achieved by the deflection element via diffusion. Said deflection is preferably caused by a diffusive ink. The diffusive ink is preferably configured to deflect incident light at an angle of 90° with respect to the direction of incidence.

The deflection element is preferably arranged on a top surface and/or a bottom surface of the light guiding element and/or is arranged so as to be in contact with the light guiding element. For instance, the deflection element can be printed onto the top surface and/or the bottom surface of the light guiding element. Alternatively, it is likewise conceivable to provide the deflection element as a film or the like.

The data carrier preferably further comprises at least one encapsulation element that at least partially encapsulates the light emitting element.

The encapsulation element preferably is a resin and/or is at least partially transparent and/or is regionally configured to absorb light being emitted from the light emitting element.

The encapsulation element serves the purpose of protecting the light emitting element from external influences, particularly during the manufacturing of the data carrier.

The encapsulation element can only partly or entirely encapsulate the light emitting element or the component the light emitting element is provided on. For instance, in the event that the light emitting element is provided on an electronic module it is preferred that the encapsulation element at least partially encapsulates the electronic module.

The encapsulation element is preferably at least partially arranged in the light guiding element. For instance, the electronic module comprising the light emitting element could be entirely encapsulated by the encapsulation element and both the electronic module as well as its encapsulation could be entirely embedded within the light guiding element. Alternatively, it is conceivable that only part of the electronic module is encapsulated by the encapsulation element, for instance a top surface of the electronic module, and wherein the encapsulated part of the electronic module is arranged outside of the light guiding element.

The encapsulation element preferably corresponds to a resin as it is known in the state of the art. A preferred resin is epoxy. A colour of the encapsulation element can vary. For instance, the encapsulation element can be transparent, white or black. The colour of the encapsulation element is preferably determined by the resin, for instance, transparent, white or black epoxies can be used.

Moreover, the encapsulation element can be transparent and/or non-transparent. An at least regionally transparent encapsulation element is preferred for those regions of the encapsulation element that are arranged within the light guiding element. Regions of the encapsulation element that are arranged outside of the light guiding element could be transparent as well as non-transparent. A non-transparent encapsulation element can serve the purpose of selectively blocking the light being emitted from the light emitting element. For instance, a light emitting element in the form of an LED diode typically emits light along many directions, and wherein an emission may be wanted only along directions that lead into the light guiding element. The light being emitted along one or more unwanted directions could consequently be blocked by means of a non-transparent encapsulation element in those regions. For instance, if an emission of the light along the extension direction shall be prevented, a non-transparent encapsulation element could be arranged on a top side of an electronic module comprising the light emitting element.

The data carrier preferably further comprises at least one blocking element that is configured to block light being emitted from the light emitting element.

The blocking element preferably is arranged above and/or below the light emitting element and/or at least partially congruent with the light emitting element.

The blocking element is preferably configured to absorb incident light being emitted from the light emitting element.

That is, a selective blocking of light can also be achieved by means other than a non-transparent encapsulation.

In order to at least partially block the light being emitted from the light emitting element it is preferred that the blocking element is arranged above and/or below the light emitting element and furthermore at least partially congruent with the light emitting element, i.e. the blocking element preferably at least partially covers the light emitting element with respect to the extension direction.

The blocking element is particularly preferably arranged before the light emitting element with respect to the extension direction, i.e. above the light emitting element, in order to block a vertical light extraction.

The blocking element preferably extends at least partially along the transverse direction. For instance, the blocking element could correspond to a black print that is regionally arranged on the top surface of the light guiding element, wherein one or more other regions of the top surface of the light guiding element are free from the blocking element. However, it is likewise conceivable that the entire top surface and/or bottom surface of the light guiding element comprises at least one blocking element being arranged thereon. In addition, it is conceivable that two or more blocking elements are provided. Said two or more blocking elements could be arranged immediately adjacent to one another or spaced apart from one another with respect to the transverse direction. Moreover, said two or more blocking elements could be arranged on a same or at a different position with respect to the extension direction. That is, when the extension direction is seen as the vertical direction, the blocking elements could be arranged on a same vertical level or at different vertical levels.

The presence or absence of blocking element(s) serves the purpose of selectively illuminating or darkening one or more regions of the data carrier. For instance and as already mentioned, the data carrier can comprise at least one security element, and wherein a selective illumination of the security element could be allowed by the absence of a blocking element in the region of the security element.

In addition, it is conceivable that the blocking element comprises at least one security element. For instance, the blocking element could comprise holes or the like that are arranged in the shape of an image and/or an alphanumeric character, and wherein the blocking element does not exhibit a blocking in the region of its holes. Consequently, an illumination of the blocking elements results in an illuminated security element being provided by the blocking element.

The blocking element preferably corresponds to a coloured or opaque material such as white or black print, a reflective ink, a metal ink print, a metal foil, etc.

The data carrier preferably further comprises at least one security element, wherein the security element is configured and arranged such as to be illuminated by the light being emitted from the light emitting element and/or from light being guided within the light guiding element.

That is, the data carrier can comprise security elements other than that being provided in the blocking element. These security elements can be arranged anywhere in the data carrier.

These security element preferably have the shape of an image and/or of an alphanumeric character and/or preferably corresponds to at least one of an imprint, an engraving, a cutting, or an ablation.

Non-exhaustive examples of an image are a portrait or photograph or biometric information such as a fingerprint e.g. of the holder of the data carrier, an outline of a country, a national emblem, a state coat of arms, a state flag, a signature panel, geometric objects such as lines, circles, etc. Non-exhaustive examples of an alphanumeric character are a date of birth, a name, a social security number e.g. of the holder of the data carrier, an expiry date, etc. The security element can serve the purpose of attributing personalized information such as personal data of the holder of the data carrier to the data carrier.

The ablation preferably corresponds to a laser ablation of a metallic foil. To this end it is preferred that the data carrier, in particular the carrier body, comprises at least one metallic foil, which is laser ablated, i.e. laser personalized, so as to generate the ablation.

The data carrier can comprise one or more security elements, wherein in the event of two or more security elements they can be the same or different from one another. For instance, a first security element in the form of a blocking element comprising holes being arranged so as to constitute an image and a second security element in the form of a metallic layer being selectively ablated such that the ablations constitute another image or an alphanumeric character could be provided. It is furthermore preferred that two or more security elements are provided in different locations in the data carrier. For instance, the said first security element being provided in the blocking element could be arranged immediately above the light emitting element, for instance on the top surface of the light guiding element. The said second security element could be arranged at a distance from said first security element with respect to the extension direction and/or the transverse direction, for instance on another layer of the carrier body. Furthermore, in the event of two or more security elements, it is conceivable that the data carrier is configured such as to illuminate all of the security elements or only part of the security elements.

As mentioned earlier, a selective illumination of the security elements could be achieved via the provision of deflection elements and/or blocking elements.

Furthermore, it is conceivable that one or more security elements are provided in the data carrier that are arranged so as to be illuminated via the light guiding element, however via light being different from the light being emitted from the light emitting element. For the sake of clarity, these one or more security elements are called passive security elements.

The passive security elements can be the same as those being illuminated by light being emitted from the light emitting element, e.g. an imprint, an engraving, a cutting, or an ablation and for instance in the form of an image or an alphanumeric character.

However, unlike the security elements being arranged such as to be illuminated by light being emitted from the light emitting element, these passive security elements are located in the data carrier at a location where no light being emitted from the light emitting element is travelling or guided to. For instance, because the data carrier lacks a deflection element that would be needed to guide the light from the light guiding element towards a passive security element, or because of the presence of a blocking element that blocks the light being emitted from the light emitting element. The light being configured to illuminate a passive security element is preferably emitted from an external light source, such as a flashlight or the like, that shines its light from the outside of the data carrier into the light guiding element. For instance, an authority that checks the authenticity of the data carrier could illuminate the edges of the data carrier and thereby the edge of the light guiding element with a flashlight, whereby light from the flashlight is coupled into the light guiding element and propagating along the light guiding element with respect to the transverse direction.

The provision of passive security elements in addition to active security elements, i.e. those security elements that are configured to be illuminated by light being emitted from the light emitting element, provides additional security to the data carrier. For instance, the passive security element and the active security element could be in a particular relationship such as being identical or complementary to one another, and whereby an authenticity of the data carrier is confirmed when the security elements match one another or complement one another.

In a further aspect a secure article comprising or consisting of at least one data carrier as described above is provided. The secure article preferably is an identity card, a bank card, a smart card, a driver's licence, a passport or the like.

At this point it should be understood that the data carrier *perse* can correspond to a security document. This is the case if the data carrier is provided in the form of an identity card, for example. However, it is likewise conceivable to introduce or incorporate the data carrier into a secure article such as a passport, wherein the data carrier could correspond to or could be incorporated in a page of the passport, for instance.

Any statements made herein regarding the data carrier likewise apply to the secure article comprising or consisting of a data carrier and vice versa.

In a further aspect a method of producing a data carrier, preferably a data carrier as described above, is provided. The method comprises the steps of i) providing a carrier body defining an extension direction, and ii) providing at least one light emitting element being arranged in the carrier body. The carrier body comprises at least one light guiding element, wherein the light emitting element is at least partially and preferably entirely arranged in the light guiding element. The light guiding element is configured to guide light being emitted from the light emitting element within the light guiding element and along a transverse direction extending perpendicularly to the extension direction.

Any statements made herein regarding the data carrier or the secure article comprising or consisting of the data carrier likewise apply to the method of producing the data carrier or vice versa.

The provision of the carrier body and the provision of the light emitting element preferably correspond to steps as they are known in the state of the art and in the field of the card industry. That is, the carrier body is preferably produced in a regular card manufacturing process, for instance by arranging the light guiding element and one or more layers ultimately forming the carrier body on top of one another. Thereafter, it is preferred to generate a cavity at least in the light guiding element, for instance by punching a punching tool into the light guiding element. Thereafter the light emitting element can be arranged in said cavity and the manufacturing of the carrier body can be completed, for instance by ultrasonic welding or thermal welding or lamination.

That is to say, the present invention provides an independent embedded light source and contactless and/or dual transponder on a preferably single layer for glowing edges or backlight effect. At the same time, the present invention offers an easy and cost effective way to lighten edges of data carriers and enhances a visual perception of security elements in the data carrier.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows an exploded sectional view of a data carrier comprising a light guiding element and a light emitting element according to the invention;
- Fig. 2: shows an exploded sectional view of another data carrier comprising a light guiding element and a light emitting element according to the invention;
- Fig. 3: shows a top view on a security element of a data carrier according to the invention, wherein the security element is illuminated by the data carrier;
- Fig. 4: shows a top view on the security element of the data carrier according to figure 3, wherein the security element is illuminated by an external source.

### DESCRIPTION OF PREFERRED EMBODIMENTS

Aspects of the data carrier 1 according to the invention shall be explained in greater detail with respect to the figures.

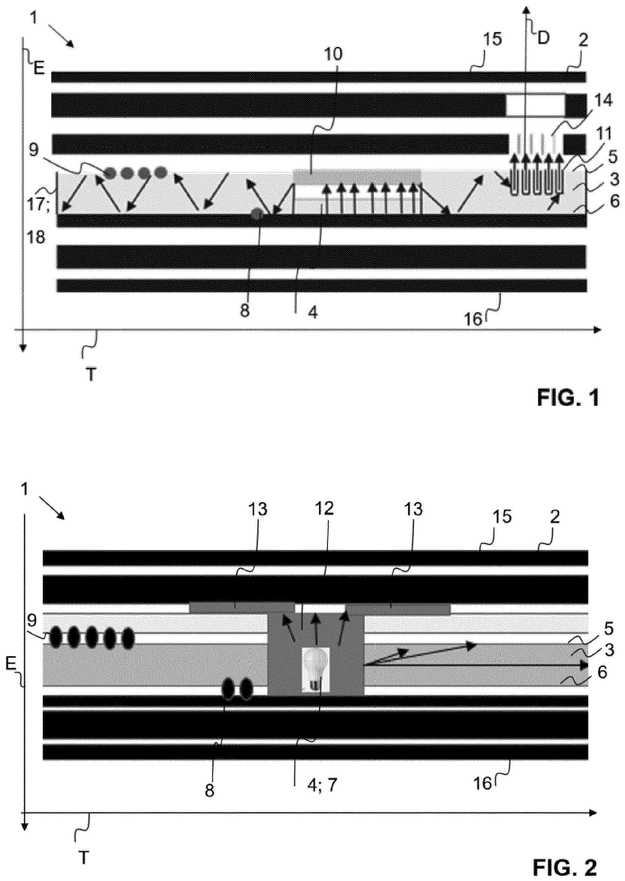

As follows from figures 1 and 2, the data carrier 1 comprises a carrier body 2 in the form of a multi-layer structure comprising several layers as commonly known in the state of the art and having a top surface 15 and a bottom surface 16. The carrier body 2 furthermore defines an extension direction E extending from said top surface 15 towards said bottom surface 15. The extension direction E can be seen as a vertical direction of the carrier body 2. Moreover, a transverse direction T running perpendicularly to the extension direction E can be seen as a horizontal direction of the carrier body 2.

A light guiding element 3 is arranged within the multi-layer structure of the carrier body 2. Here, the light guiding element 3 corresponds to a film or layer that extends along an entire width of the data carrier 1 with respect to the transverse direction T. The light guiding element 3 comprises a top surface 5 and a bottom surface 6 being arranged opposite to said top surface 5 with respect to the extension direction E. Moreover, a light emitting element 4 is arranged in the carrier body 2, namely entirely embedded within the light guiding element 3. As indicated by the arrows, the light guiding element 3 is configured to guide light being emitted from the light emitting element 4 within the light guiding element 3 and along the transverse direction T. In particular, the light guiding element 3 is configured to guide the light being emitted from the light emitting element 4 by reflecting the light from its top surface 5 and bottom surface 6.

The light emitting element 4 of the data carrier 1 depicted in figure 1 corresponds to an LED panel, whereas the light emitting element 4 of the data carrier 1 depicted in figure 2 is provided in an electronic module 7 comprising the light emitting element 4. That is, the light emitting element 4 is provided in the form of an LED module 7 being arranged in the light guiding element 3. In both cases, a power element 8 being in connection with the light emitting element 4 and being configured to power the light emitting element 4 is arranged in the carrier body 2. Here, said power element 8 corresponds to an antenna being arranged on the bottom surface 6 of the light guiding element 3. This antenna can be called an LED antenna 8. As follows from figures 1 and 2, the data carrier 1 comprises a second power element 9, again an antenna, which is arranged on the top surface 5 of the light guiding element 3. Said antenna 9 corresponds to a dual interface antenna of a dual interface module (not depicted). The dual interface antenna 9 is preferably configured to an RFID or contactless application and is furthermore laid through well know techniques such silver ink printing, wire embedding, wire transfer, electrodeposition or etching. The LED antenna 8 is preferably laid using the same types of techniques and is furthermore connected to one or several LEDs 4 of the LED panel 4 or the LED module 7, respectively.

In the data carrier 1 of figure 2 the light emitting element 4 in the form of the LED module 7 is inserted in a transparent encapsulation element 12 and is connected in a way to emit its light mostly vertically upwards, i.e. towards the top surface 15 the carrier body 2.

To customize a color, an edge 17 of the light guiding element 3 in the data carrier 1 of figure 1 comprises a colouring element 18 in the form of a semi-transparent ink, such that its edge 17 will glow in colours when it is illuminated by the emitted light travelling along the light guiding element 3.

Moreover, in the data carrier 1 depicted in figure 1 a reflection element 10 in the form of a metallic layer is arranged above and congruently with the light emitting element 4. The reflection element 10 is arranged such that the light being incident on the reflection element 10 is reflected from the reflection element 10 back into the light guiding element 3. The reflection element 10 is arranged here in the region of the top surface 5 of the light guiding element 3. The data carrier 1 further comprises a deflection element 11, the deflection element 11 being arranged such that light being guided within the light guiding element 3 and being incident on the deflection element 11 is deflected here along a deflection direction D running perpendicularly to the transverse direction T. The deflection element 11 is configured to diffuse or scatter the incident light and serves the purpose of guiding the incident light from the light guiding element 3 towards a security element 14 being provided in the data carrier 1. Here, the deflection element 11 is arranged in the region of the top surface 5 of the light guiding element 3.

The data carrier 1 depicted in figure 2 comprises two blocking elements 13 being configured to block light being emitted from the light emitting element 4. In the depicted example, the blocking elements 13 are arranged above the light emitting element 4. The blocking elements 13 absorb incident light being emitted from the light emitting element 4.

As mentioned previously, the data carrier 1 depicted in figure 1 furthermore comprises a security element 14, wherein the security element 14 is configured and arranged such as to be illuminated by the light being emitted from the light emitting element 4. In particular, the security element 14 is arranged above and congruent with the deflection element 11, such that it is well illuminated by the emitted light and furthermore from an inside of the data carrier 1.

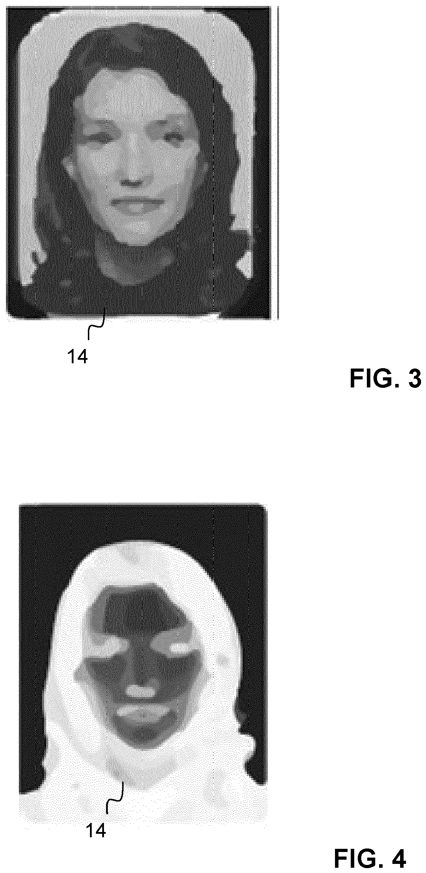

Said security element 14 could correspond to an ablation in the form of an image as depicted in figured 3 and 4. Said ablation could correspond to a laser ablation being generated in a metallic foil that is provided in the data carrier 1. To this end figure 3 schematically indicates an appearance of such a security element 14 when being illuminated from within the data carrier 1 and with light being emitted from the light guiding element 3. The image appears as regular image. Figure 4 schematically indicates an appearance of such a security element 14 when being illuminated from an external source, such as by a border control reader. As a consequence, a negative image is interpreted by the reader.

Increasing the illumination of a security element enhances the visual quality perception of the human eye. In the depicted examples, the light in the clear area of the image are strengthened while the dark areas of the image are less impacted (light blocked). Consequently, a contrast becomes higher and details are more visible to the human eyes.

**LIST OF REFERENCE SIGNS**

| | | | |
|---|---|---|---|
| 1 | data carrier | 12 | encapsulation element |
| 2 | carrier body | 13 | blocking element |
| 3 | light guiding element | 14 | security element |
| 4 | light emitting element | 15 | top surface |
| 5 | top surface | 16 | bottom surface |
| 6 | bottom surface | 17 | edge |
| 7 | electronic module | 18 | colouring element |
| 8 | power element | | |
| 9 | power element | E | extension direction |
| 10 | reflection element | T | transverse direction |
| 11 | deflection element | D | deflection direction |

## Claims

1. A data carrier (1) for a secure article comprising:
- a carrier body (2) defining an extension direction (E); and
- at least one light emitting element (4) being arranged in the carrier body (2);
**characterized in that** the carrier body (2) comprises at least one light guiding element (3),
wherein the light emitting element (4) is at least partially and preferably entirely arranged in the light guiding element (3), and
wherein the light guiding element (3) is configured to guide light being emitted from the light emitting element (4) within the light guiding element (3) and along a transverse direction (T) extending perpendicularly to the extension direction (E).

2. The data carrier (1) according to claim 1, wherein the light guiding element (3) has a transmittance to light being in the ultraviolet region of the electromagnetic spectrum and/or in the visible region of the electromagnetic spectrum and/or in the infrared region of the electromagnetic spectrum, the transmittance preferably being 80 % or more, and/or
wherein the light guiding element (3) is provided as at least one film and/or as at least one layer, preferably comprising or consisting of one or more polymers and/or one or more plastics and/or preferably extending along an entire width of the data carrier (1) with respect to the transverse direction (T).

3. The data carrier (1) according to any one of the preceding claims, wherein the light guiding element (3) comprises a top surface (5) and a bottom surface (6) being arranged opposite to said top surface (5) with respect to the extension direction (E), and
wherein the light guiding element (3) is configured to guide the light being emitted from the light emitting element (4) by reflecting the light from its top surface (5) and/or bottom surface (6).

4. The data carrier (1) according to any one of the preceding claims, further comprising at least one electronic module (7), the electronic module (7) comprising the light emitting element (4), and/or
wherein the light emitting element (4) comprises at least one of a light emitting diode (LED), an LED panel, a micro LED, an organic light emitting diode, or a quantum dot.

5. The data carrier (1) according to any one of the preceding claims, further comprising at least one power element (8) that is in connection with the light emitting element (4) and that is configured to power the light emitting element (4), and
wherein the power element (8) is preferably arranged in the carrier body (2) and is particularly preferably arranged on a top surface (5) of the light guiding element (3) or on a bottom surface (6) of the light guiding element (3).

6. The data carrier (1) according to claim 5, wherein the power element (8) is in wired contact or in wireless contact with the light emitting element (4), and/or
wherein the power element (8) corresponds to an antenna, preferably to an RFID antenna, and/or
wherein the power element (8) is configured to be powered by an external device, the external device preferably being an RFID reader.

7. The data carrier (1) according to any one of claims 4 to 6, further comprising at least one further electronic module,
wherein the further electronic module is a dual interface module or a contactless module, and/or
wherein the further electronic module is in connection with at least one power element (9).

8. The data carrier (1) according to claim 7, wherein the power element being in connection with the further electronic module corresponds to the power element being in connection with the light emitting element (4), or
wherein the power element (9) being in connection with the further electronic module differs from the power element (8) being in connection with the light emitting element (4), a location of the power element (9) being in connection with the further electronic module preferably differs from a location of the power element (8) being in connection with the light emitting element (4) with respect to the extension direction (E) and/or with respect to the transverse direction (T).

9. The data carrier (1) according to any one of the preceding claims, further comprising at least one reflection element (10), the reflection element (10) being arranged such that light being guided within the light guiding element (3) and being incident on the reflection element (10) is reflected from the reflection element (10) back into the light guiding element, (3) and
wherein the reflection element (10) is preferably arranged on a top surface (5) and/or a bottom surface (6) of the light guiding element (3), and/or
wherein the reflection element (10) preferably comprises or consists of at least one metallic compound and particularly preferably is a metallic layer.

10. The data carrier (1) according to any one of the preceding claims, further comprising at least one deflection element (11), the deflection element (11) being arranged such that light being guided within the light guiding element (3) and being incident on the deflection element (11) and is deflected along one or more deflection directions (D) running at an angle to the transverse direction (T), one of the deflection directions (D) preferably running perpendicularly to the transverse direction (T), and
wherein the deflection element (11) is preferably configured to diffuse and/or scatter incident light and/or preferably corresponds to at least one of a diffusive ink, a scattering material, a texturation or a structural colouring, and/or
wherein the deflection element (11) is preferably arranged on a top surface (5) and/or a bottom surface (6) of the light guiding element (3).

11. The data carrier (1) according to any one of the preceding claims, further comprising at least one encapsulation element (12) that at least partially encapsulates the light emitting element (4), and
wherein the encapsulation element (12) preferably is a resin and/or is at least partially transparent and/or is regionally configured to absorb light being emitted from the light emitting element (4).

12. The data carrier (1) according to any one of the preceding claims, further comprising at least one blocking element (13) that is configured to block light being emitted from the light emitting element (4), and
wherein the blocking element (13) preferably is arranged above and/or below the light emitting element (4) and/or at least partially congruent with the light emitting element (4), and/or
wherein the blocking element (13) is preferably configured to absorb incident light being emitted from the light emitting element (4).

13. The data carrier (1) according to any one of the preceding claims, further comprising at least one security element (14), wherein the security element (14) is configured and arranged such as to be illuminated by the light being emitted from the light emitting element (4) and/or from light being guided within the light guiding element (3), and
wherein the security element (14) preferably has the shape of an image and/or of an alphanumeric character and/or preferably corresponds to at least one of an imprint, an engraving, a cutting, or an ablation.

14. A secure article comprising or consisting of at least one data carrier (1) as claimed in any one of the preceding claims, the secure article preferably being an identity card, a bank card, a smart card, a driver's licence, a passport or the like.

15. A method of producing a data carrier (1), preferably a data carrier (1) according to any one of claims 1 to 13, the method comprising the steps of:
- Providing a carrier body (2) defining an extension direction (E); and
- Providing at least one light emitting element (4) being arranged in the carrier body (2);
**characterized in that** the carrier body (2) comprises at least one light guiding element (3),
wherein the light emitting element (4) is at least partially and preferably entirely arranged in the light guiding element (3), and
wherein the light guiding element (3) is configured to guide light being emitted from the light emitting element (4) within the light guiding element (3) and along a transverse direction (T) extending perpendicularly to the extension direction (E).
